# EUROPEAN PATENT APPLICATION

(11) **EP 1 858 220 A1**
(43) Date of publication of application: **21.11.2007**
(21) Application number: 06290791.0
(22) Date of filing: 16.05.2006
(51) Int. Cl.: H04L 29/06

(54) **Multimedia data interface device**

(71) Applicant: Thomson Licensing, 92100 Boulogne-Billancourt (FR)
(72) Inventor: Chapel, Claude, 35200 Rennes (FR); Guillemot, Jean-Charles, 35235 Thorigne Fouillard (FR); Mace, Gaël, 35850 Langan (FR)
(74) Representative: Blot, Philippe Robert Emile

(57) **Abstract**

The invention concerns an interface device (2) for interfacing a multimedia device (3) with a network (4). The interface device (2) comprises a hardware processor (8), a network interface (6) and a local embedded processor (10).

The interface device (2) is characterised in that the hardware processor (8) is adapted to process data comprising a data payload and a navigational portion and the interface device (2) comprises a control data interface (11) and a multimedia data interface (14).

The control data interface (11) permits communication of a data payload containing only control data with the multimedia device (3) through a control communication channel (12) and the multimedia data interface (14) permits communication of a data payload containing only multimedia data through a multimedia communication channel (15) with the multimedia device (3).

## Description

The invention is related to an interface device for interfacing a multimedia device with a network for data communication.

Multimedia data contains visual, audio, animation, graphical or text information or a combination of any of these. Due to the presence of the various different information content, multimedia data files are large in size, require high bit-rate transfers and communications can last for up to one hour or more. The quantity of multimedia data communicated is extremely large with tens of Gigabytes being transmitted at a data rate of 208Mbps for standard definition television.

Medical applications, military applications and applications found in television studios are examples of applications running on multimedia devices that communicate multimedia data. One Gigabit Ethernet networks provide sufficient bandwidth for an Ethernet network to be implemented for multimedia data communication and multimedia devices to be linked through an Ethernet network infrastructure. The heterogeneous networks employing specialised network technology currently used for multimedia data communication between multimedia devices can be replaced with standard and widely available Ethernet network technology.

The communication of multimedia data necessitates a high quality of service. The communication of the multimedia data needs to be strictly controlled in the temporal domain as multimedia data comprises time tight information consumed in real time and no delay or interruption in the arrival of the multimedia data can be tolerated at the receiving end.

For example, in a television studio, multimedia audiovisual equipment such as a live studio camera communicating with editing equipment, vision mixing equipment or live transmission equipment needs the transfer of the multimedia data from the live studio camera to arrive at the other equipment without delay or loss of the data. Any delay in the arrival or the loss of the multimedia data is either immediately apparent for a television audience or causes desynchronisation between the various elements of a television studio involved in the production of a television program.

Internet protocol (IP) proposes some real time mechanisms to control time tight data communication, however these mechanisms are not sufficient as Ethernet networks using internet protocol were not intended for real time multimedia data communication across a network but rather for the transfer of information technology data that does not require a high quality of service or strict control in the temporal domain. Additionally, during a period of overloading a network switch in an Ethernet network can reduce the transmission from an application running on a device connected to the network.

The communication of multimedia data on an Ethernet network using internet protocol is subject to imposed restrictions on the rate of data communication during periods of data traffic congestion that results in delayed data arrival and data loss.

WO 03/069440 describes a network processor that communicates data between a network interface and a user interface. The network processor comprises protocol aware logic processors, a network stack processor, and a shared buffer. Data is communicated between the network interface and the user interface by storing the data in the shared buffer and using the protocol aware logic processors to verify information in packet protocols. The network stack processor then transfers the data from the shared buffer to the network interface or the user interface.

The aim of the present invention is to provide a device that offers data communication respecting the strict temporal requirements of multimedia data communication on a network, in particular an Ethernet network using internet protocol for data communication.

With this goal in mind, the present invention provides an interface device for interfacing a multimedia device with a network according to claim 1.

Other features of the interface device are found in the dependent claims.

The above object, features and other advantages of the present invention will be best understood from the following detailed description in conjunction with the accompanying drawings, in which:
Figure 1 is a schematic block diagram of an interface device according to the invention interfacing a multimedia device with a network;
Figure 2 is a flow chart showing the processing, by a hardware processor, of data navigational portions associated with data received by the interface device;
Figure 3 is a flow chart showing the processing, by a hardware processor, of navigational portions of data to be transmitted from the interface device;
Figure 4 is a schematic block diagram of the interface device of Figure 1 showing further details related to the transmission of data from the interface device; and
Figure 5 is a flow chart showing the operation of a multimedia data bit-rate regulation mechanism.

In the drawings, the same reference numbers are used to designate the same elements.

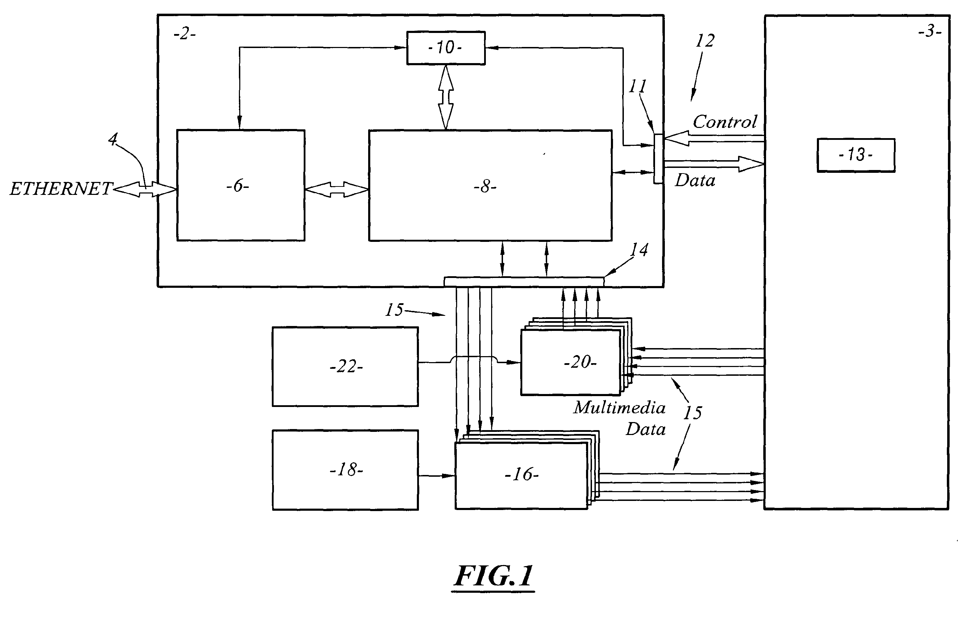

An interface device 2 for interfacing a multimedia device 3 with a network 4 for the communication of data with another multimedia device on the network 4 is illustrated in Figure 1. The data communicated on the network 4 comprises at least one navigational portion and a data payload.

The data payload is communicated between a source application and a destination application on multimedia devices connected through the network 4 and navigated using the navigational portions of the data.

The data payload comprises control data or multimedia data. The control data contains information that either organises and synchronises the multimedia data communication between the multimedia devices communicating through the network 4, or the control data contains information to control devices such as a multimedia device 3 connected to the network 4.

The multimedia data is for example a television program that is communicated live from a camera or played from a server. The communication of multimedia data must be continuously streamed without loss or delay and can be required to be communicated in real time or slower or faster than real time.

The control data is not subject to the strict timing that is required for the multimedia data communication, nevertheless a low latency is expected. The control data can be disrupted or resent without any negative effect on the overall quality of service of the multimedia data communication. The control data does not contain the large quantities of data associated with the multimedia data.

The multimedia device 3 is, for example, a live television studio camera communicating with live editing equipment such as vision mixing equipment through the network 4.

The network 4 in the current embodiment of the invention is implemented using a 1Gbps Ethernet network infrastructure and uses Ethernet and internet protocols for navigation of data on the network 4. In alternative embodiments Ethernet at 10Gbps or an optical fiber network infrastructure are employed for higher data communication speeds.

The communication of data containing multimedia and control data payloads employs navigational portions of an Ethernet protocol (i.e. an Ethernet frame), an internet protocol (IP) as well as a tranport control protocol (TCP), a user datagram protocol (UDP) or a real time transport protocol (RTP).

The communication of data payloads containing control data additionally employs the navigational portions of a real-time control protocol (RTCP), an address resolution protocol (ARP), as well as an internet control message protocol (ICMP) or an internet group management protocol (IGMP).

The interface device 2 comprises a network interface 6 to establish communication with the network 4, a hardware processor 8 for implementing dedicated hardware processing and communication of the data arriving from and being sent to the network 4, a local embedded processor 10 for software processing of navigational portions and of the control data, a control data interface 11 for the communication of data payloads comprising control data with an external central processing unit 13 of the multimedia device 3 through a control data channel 12 and a multimedia data interface 14 for communicating data payloads comprising multimedia data between the hardware processor 8 and the multimedia device 3 through a multimedia data channel 15.

The control data is either used by the local embedded processor 10 or the external central processing unit 13 depending on the destination of the control data contained in the navigational portions. The control data is used locally by the local embedded processor 10 to control the configuration of the interface device 2 or used externally by an application on the multimedia device 3.

The network interface 6 comprises at least one RJ45 connector linking the interface device 2 to the network 4. The network interface 6 also contains hardware circuits that are adapted to send data bits along the physical communications medium of the network 4 and to receive data bytes from the physical communications medium data of the network 4.

The hardware processor 8 receives incoming data comprising navigational data portions and a data payload from the network 4 through the network interface 6 and also sends data comprising navigational portions and a data payload to be transmitted on the network 4 through the network interface 6.

The hardware processor 8 is a dedicated hardware processor containing highly integrated logic components in an application specific integrated circuit (ASIC) or a field-programmable gate array (FPGA).

The hardware processor 8 is hardware programmed to receive and process navigational portions corresponding to data link, network and transport layers of incoming data from the network 4 and to add navigational portions corresponding to the data link, network and transport layers to the data payloads transferred from the multimedia device 3 to the hardware processor 8 for transmission on the network 4.

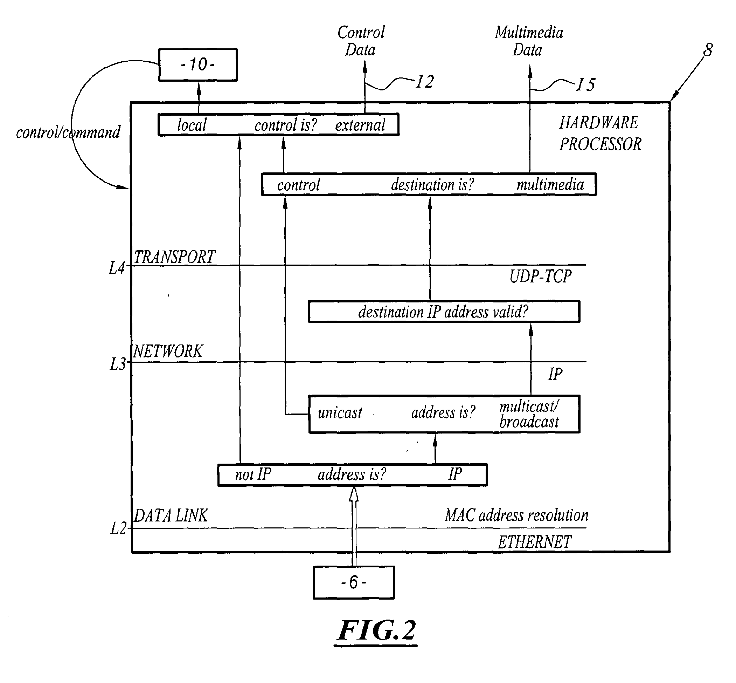

The hardware processor 8 is programmed to process Ethernet protocol, IP, TCP and UDP navigational portions. As illustrated in Figure 2, upon reception of data from the network interface 6 the hardware processor 8 is programmed to detect a medium access controller (MAC) address in the navigational portion of the Ethernet protocol. The incoming data is processed further only if the MAC address in the navigational portion corresponds to the MAC address of the interface device 2.

Processing continues by examining the navigational portion of the internet protocol through the detection and verification of an internet protocol (IP) address. If the data is unicast targeting the interface device 2, the hardware processor 8 examines the navigational portion of the transport control protocol or the user datagram protocol to detect whether the destination of the data payload is the control data interface 11 or the multimedia data interface 14 and subsequently transfers the data payload to the corresponding interface. The data payload comprising control data is transferred to the control data interface 11 and the data payload comprising multimedia data is transferred to the separate multimedia data interface 14.

If the incoming data is multicast/broadcast the hardware processor 8 examines the navigational portion of the internet protocol and verifies that the internet protocol address corresponds to the internet protocol address of the multimedia device 3 or is associated with the multimedia device 3 before processing the navigational portion of the transport control protocol or the user datagram protocol as outlined above. Furthermore, when the incoming data is unicast the hardware processor 8 is also adapted to examine the navigational portion of the internet protocol to filter the incoming data.

Additionally, the hardware processor 8 is programmed to transfer data to the local embedded processor 10 if the incoming data does not contain an internet protocol address or if the destination of the data contained in the navigational portion of the transport control protocol or the user datagram protocol corresponds to that of the local embedded processor 10.

The local embedded processor 10 is a standard hardware processor which is running custom software. It receives data with data payloads containing only control data and the control data is processed locally by the software running on the local embedded processor 10.

The local embedded processor 10 uses software processing to process an entire protocol stack comprising protocol layers from the data link layer to the application layer and can process application layer navigational portions of protocols such as internet small computer system interface (iSCSI) to setup the retrival of data stored on the multimedia device 3 for transfer over the network 4.

The local embedded processor 10 also generates navigational portions for the hardware processor 8 that are added by the hardware processor 8 to the payload data to be communicated on the network 4.

Data communicated to the interface device 2 containing navigational portions of a real-time control protocol (RTCP), an address resolution protocol (ARP), an internet control message protocol (ICMP) or an internet group management protocol (IGMP) are all routed by the hardware processor 8 to the local embedded processor 10 to be processed locally or subsequently communicated to the external central processing unit 13.

These protocols are used to organise and synchronise the multimedia data communication between the multimedia device 3 and the network 4 and the local embedded processor 10 is adapted to generate navigational portions for the above protocols during the communication of control data from the multimedia device 3 to the network 4 or the local embedded processor 10 to the network 4.

The local embedded processor 10 also processes any unexpected data communication arriving at the interface device 2.

The destination of the incoming data, that is whether it is destined for the local embedded processor 10, the control data interface 11 or the multimedia data interface 14, is distinguished using the transport layer protocol navigational portion, such as the transport control protocol or the user datagram protocol navigational portion, and an individual IP address assigned to each of the local embedded processor 10, the control data interface 11 and the multimedia data interface 14.

The local embedded processor 10, the control data interface 11 and the multimedia data interface 14 are each attributed an individual port number and an IP address following the opening of a communication connection. Using the transport control protocol, a TCP port number is attributed when a TCP connection is established between the multimedia device 3 and another device on the network 4 by the local embedded processor 10.

The local embedded processor 10, in association with the external central processing unit 13, is adapted to establish the connection using the "connect", "bind", "listen" and "shutdown" functions of the standard socket system call. The local embedded processor 10 opens a socket and listens passively for a connection coming from the network 4. The device on the network 4 initiates an active open request by sending an initial synchronisation TCP navigational portion to the multimedia device 3 via the local embedded processor 10 which returns a synchronisation TCP navigational portion in response. An acknowledgement TCP navigational portion is sent to the multimedia device 3 to finally create the connection for data communication and source and destination TCP port numbers are attributed for the connection. The local embedded processor 10 establishes, with the device on the network 4, port numbers and IP addresses for the local embedded processor 10, the control data interface 11 and the multimedia data interface 14 so that data can be communicated through the network 4 to the local embedded processor 10, the control data interface 11 and the multimedia data interface 14 using their individual TCP port number and their individual IP address.

During the connection process, information concerning the transport protocol to be used, the IP addresses and MAC address of the devices are exchanged as well as parameters relative to the bandwidth of the data communication. A plurality of connections to one device or several devices on the network 4 can be made in this way.

The port number and IP address are inserted into the navigational portions of the transport control protocol (or the user datagram protocol in the case where the connection is opened for communication with user datagram protocol) and the internet protocol to distinguish the destination of the data to be communicated.

The data connection is closed by the local embedded processor 10 by communicating a TCP navigational portion to the device on the network 4 indicating that the data transfer is finished. The connection is closed once a similar TCP navigational portion is received by the local embedded processor 10 from the device on the network 4.

The hardware processor 8 is programmed to verify that no data payloads are lost in transmission to the multimedia device 3. The navigational portion of the transport control protocol contains a sequence number that is verified by the hardware processor 8 upon receipt of data permitting the hardware processor 8 to verify that the payload data has arrived in the correct order. Once verified, the hardware processor 8 sends a TCP navigational portion with an acknowledgment of the receipt of the payload data to the transmitting device on the network 4. If the acknowledgement is not received within a predetermined amount of time by the transmitting device, the data is resent to the interface device 2.

When sending data to the network 4 from the multimedia device 3, the hardware processor 8 is programmed to resend the data if an acknowledgement is not sent by the receiving device on the network 4 after the predetermined amount of time has elapsed.

The hardware processor 8 is also programmed to evaluate a checksum for the received data to verify that no data bytes are damaged by comparing the result with the checksum of the received TCP navigational portion and to generate a checksum for the data to be transmited on the network 4 that is inserted into the TCP navigational portion to be transmited.

The control data transferred to the control data interface 11 by the hardware processor 8 is transferred to the external central processing unit 13 of the multimedia device 3 through the control data channel 12. In the current embodiment, the control data channel 12 comprises a physical communication medium such as a cable extending from the control data interface 11 to the multimedia device 3 via an external memory buffer (not illustrated) used to optimise the transfer of control data to and from the multimedia device 3. The hardware processor 8 is programmed to transfer only control data between the hardware processor 8 and the control data interface 11.

The external central processing unit 13 is a standard hardware processor running custom software. Functioning as a software processor, it receives and sends control data to synchronise the communication of multimedia data between the multimedia device 3 and the network 4 or to control devices connected to the network 4.

The control data comprising control instructions is received from both the local embedded processor 10 and the network 4 and interpreted and executed by the external central processing unit 13. The external central processing unit 13 is adapted to send control data via the local embedded processor 10 to a device on the network 4 and via the hardware processor 8 to a device on the network 4. The external central processing unit 13 is also adapted to organise the transfer of multimedia data from the multimedia device 3 to the hardware processor 8 via the multimedia data interface 14.

The opening and closing of connections for data communication to and from a device on the network 4, as described earlier, is achieved through the exchange of control data between the local embedded processor 10 and the device on the network 4 and information such as the source and destination port numbers are exchanged once the connection is established. The external central processing unit 13 contains a connection management table and maintains the table updated as connections are opened and closed with devices on the network 4.

The external central processing unit 13 communicates the characteristics of the connection that are necessary for the data communication such as the MAC addresses, IP addresses and the TCP port numbers to the local embedded processor 10. The local embedded processor 10 then configures the hardware processor 8 to identify a connection when receiving data from a device on the network 4 and provides the relevant MAC addresses, IP addresses and the TCP port numbers to the hardware processor 8 that are added by the hardware processor 8 to the navigational portions when sending data on the network 4.

The opening and closing of connections for data communication using the user datagram protocol or the real time transport protocol and the subsequent transfer of the connection characteristics to the local embedded processor 10 is done in a similar manner.

The communication of other forms of control data, that monitor the quality of service of a multimedia communication through a real time control protocol or that use TCP to keep a record of sequence breaks or timeout occurrences in the arrival multimedia data, is performed through the communication of control data between the multimedia device 3 and the device on the network 4 via the local embedded processor 10.

If the multimedia device 3 is a data storage unit for example, a device on the network 4 sends control data instructions of the type "open file, get file, close file" to the external central processing unit 13 via the local embedded processor 10 requesting a multimedia data file. The external central processing unit 13 would send control instructions internally in the storage unit to open, retrieve the multimedia data, close the file and transfer the file to the multimedia data interface 14. It then informs the local embedded processor 10 of the destination of the multimedia data file.

The multimedia data is transferred to the hardware processor 8 by the multimedia device 3 and the hardware processor 8 is informed by the local embedded processor 10 of the connection details. The hardware processor 8 adds the relevant navigational portions to the data payload and the multimedia data file is subsequently sent to the network 4.

Multimedia data entering the interface device 2 is transferred only to the multimedia data interface 14 by the hardware processor 8 and is subsequently transported to the multimedia device 3 through the multimedia data channel 15. The hardware processor 8 is programmed to remove all navigational portions and to assemble the data payloads comprising multimedia data in the correct order, as described above, to form a continuous data stream of multimedia data at the multimedia data interface 14 and on the multimedia data channel 15 to the multimedia device 3.

A request to communicate multimedia data to the interface device 2 or to receive multimedia data from the interface device 2 may originate from a number of applications running on other multimedia devices on the network 4 or a request may originate from one application that intends establishing several communications of multimedia data.

The hardware processor 8 is adapted to establish a plurality of virtual multimedia communication channels in the multimedia data interface 14 and each virtual multimedia communication channel communicates between the multimedia data interface 14 and the multimedia device 3 through the multimedia data channel 15. Each virtual multimedia communication channel corresponds to a data communication and transports multimedia data to and from the multimedia device 3. The hardware processor 8 is also adapted to terminate the virtual multimedia communication channel once the multimedia data transfer is completed.

One or several virtual multimedia communication channels are opened by opening a data communication connection using the standard socket call system through the exchange of control data between the multimedia device 3 and a device on the network 4 via the local embedded processor 10 as described earlier.

Once the connection is open, the virtual multimedia communication channel is assigned a TCP port number and each virtual multimedia communication channel is assigned an individual and distinguishing IP address. In the current embodiment, each virtual multimedia communication channel, whether it is an incoming data communication to the interface device 2 or an outgoing communication from the interface device, is assigned an individual destination IP address. Thus, in the current embodiment the virtual multimedia communication channels have the same port number (the port number of the multimedia data interface 14).but different destination IP addresses. A record of the IP addresses and port number for each virtual multimedia communication channel connection opening is maintained in the connection management table of the external central processing unit 13.

The hardware processor 8 then establishes and sets up the virtual multimedia communication channel in the multimedia data interface 14 by associating the virtual multimedia communication channel with a dedicated memory buffer segment that is connected to the multimedia data interface 14 via a memory bus. The dedicated memory buffer segment is also connected to the multimedia device 3 and each dedicated memory buffer segment has a physically separated communication medium, such as an electrical wire of a cable, connected to the multimedia device 3.

The memory buffer segment is a segment of a single DRAM memory 16, 20 that has been partitioned with data flow being managed by the principle of first in first out (FIFO) and the memory segment is continually maintained full for data flow in the direction from the multimedia device 3 to the network 4. For data flow in the direction from the network 4 to the multimedia device 3 the memory segment is continually maintained empty.

In another embodiment, a single connection is used between the DRAM memory 16, 20 and the multimedia device 3 and the multimedia data of the virtual multimedia communication channels is communicated serially using internal navigational portions that are added by the hardware processor 8.

A total of eight segments of a DRAM memory 16, 20 are illustrated in Figure 1, thus allowing a total of eight virtual multimedia communication channels to be created in the current embodiment. In figure 1, the single DRAM memory is illustrated in two parts 16, 20 for illustrative purposes.

The memory buffer is organised so as to adapt the data throughput of the network interface device to the multimedia device throughput requirements. The size of a memory buffer segment depends on whether the connection of the memory buffer segment to the multimedia device 3 is configured as a separate medium or as a single serial connection. The use of a single serial connection necessitates that the data of all the virtual multimedia communication channels be temporarily stored before subsequent multiplexing.

The size of a memory buffer segment also depends on the nature of the communications interface used for communication between the memory buffer segment and the multimedia device 3, that is whether it is proprietary or a peripheral component interconnect express (PCI express) for example. The nature of the communications interface used determines the size of the data transfers and the size of the memory buffer segment is optimised to reduce the overhead size/data transfer size ratio.

A virtual multimedia communication channel is thus setup from the multimedia data interface 14 to the multimedia device 3 through the memory bus to a dedicated memory segment and to the multimedia device 3 through an individual segment connection to the multimedia device 3. The multimedia data channel 15 in the current embodiment comprises eight virtual multimedia communication channels.

The IP destination address of the virtual multimedia communication channel is communicated to the hardware processor 8 via the local embedded processor 10. The hardware processor 8 is programmed by the embedded processor 10 to attribute a segment identification number to a memory buffer segment 16, 20 and to associate the segment identification number with a IP destination address of a virtual multimedia communication channel in order to establish the virtual multimedia communication channel.

The local embedded processor 10 informs the external central processing unit 13 of the memory buffer segment 16 through which the incoming multimedia data destined for a certain IP destination address will be communicated to it. The local embedded processor 10 also informs the external central processing unit 13 of the memory buffer segment 20 to which the multimedia device 3 should communicate multimedia data that is to be sent to a certain IP destination address on the network 4 by the hardware processor 8.

While the partitioned single DRAM memory 16, 20 contains a plurality of memory buffer segments, only those segments that have been associated with an IP destination address are active, leaving the remaining segments free to establish other virtual multimedia communication channels.

The hardware processor 8 distinguishes incoming data on different virtual multimedia communication channels by processing the incoming data as illustrated in Figure 2 and in particular detecting the destination IP address of each virtual multimedia communication channel and streaming the incoming multimedia data to the multimedia data interface 14 and the corresponding memory buffer segment 16 having a segment identification number associated with the IP destination address of the virtual multimedia communication channel. The hardware processor 8 removes all navigational portions and executes a checksum on the data as mentioned previously.

The hardware processor 8 distinguishes data sent to it by the multimedia device 3 using the segment identification number of the memory buffer segment 20 to which the multimedia data is sent by the multimedia device 3. The hardware processor 8 transfers the data from the multimedia data interface 14 and inserts the connection characteristics supplied by the local embedded processor 10 into the navigational portions that are combined with the data payload for communication on the network 4. The hardware processor 8 also performs and inserts the checksum for the data to be sent.

The hardware processor 8 is programmed to communicate multimedia data to and from the multimedia device 3 using the "send" and "recv" functions of the standard socket system call. A total of eight virtual multimedia communication channels are illustrated in Figure 1, four transporting multimedia data received by the interface device 2 and four transmitting multimedia data to be transmitted from the interface device 2.

Once the multimedia data communication has finished between a device on the network 4 and the multimedia device 3, the hardware processor 8 is informed of the closure by the external central processing unit 13 via the local embedded processor 10. The local embedded processor 10 now programs the hardware processor 8 to remove the association between the virtual multimedia communication channel IP address and the segment identification number of the memory buffer segment 16, 20 in order to terminate the virtual multimedia communication channel.

The interface device 2 has an assigned upper bandwidth limit for communication between the multimedia device 3 and the network 4 and this upper bandwidth limit is determined by a network manager of the network 4. The accumulated bandwidth of all the established virtual multimedia communication channels in the multimedia data interface 14, including the virtual multimedia communication channels for multimedia data arriving to the interface device 2 and transmitted from the interface device 2, and the bandwidth used for control data communication is always inferior to the upper bandwidth limit. In the current embodiment the control data is assigned 20% of the upper bandwidth limit with 80% reserved for multimedia data.

During the opening of a virtual multimedia communication channel, the multimedia device 3 and a device on the network 4 exchange control data via the local embedded processor 10 concerning the bandwidth and lifetime of the virtual multimedia communication channel being negotiated for data communication and the bandwidth and lifetime are determined according to the data transfer size requested by an application on the multimedia device 3 or the device on the network 4.

The data transfer size is divided into a plurality of data packets and the size of a data packet is also an adjustable parameter. The smaller the data bit rate of the virtual multimedia communication channel, the longer the virtual multimedia communication channel lifetime required to complete the multimedia data transfer.

The network 4 and the local embedded processor 10 agree and fix the bandwidth and lifetime parameters. The hardware processor 8 is adapted to be programmed by the local embedded processor 10 to ignore any interrupt requests received during the lifetime of the virtual multimedia communication channel. However, as the hardware processor 8 is controlled by the local embedded processor 10, it can receive a cancellation order from the local embedded processor 10, the cancellation order originating from a device on the network 4 or a user. Once the virtual multimedia communication channel is opened and established in the multimedia data interface 14, the multimedia data transfer commences. The virtual multimedia communication channel and the virtual multimedia communication channel bandwidth remain completely outside the control of the local embedded processor 10 during the virtual multimedia communication channel.

At the end of the virtual multimedia communication channel lifetime, the connection of the virtual multimedia communication channel is closed and the hardware processor 8 is programmed by the local embedded processor 10 to terminate the virtual multimedia communication channel setup in the multimedia data interface 14. The virtual multimedia communication channel bandwidth only becomes available for use by a new virtual multimedia communication channel when the virtual multimedia communication channel is terminated in the multimedia data interface 14. Following termination, the external central processing unit 13 is updated by the local embedded processor 10 and updates the connection management table of the connection closure.

During the virtual multimedia communication channel lifetime, the agreed parameters of the virtual multimedia communication channel cannot be changed by a device on the network 4, the network manager or the multimedia device 3 and they cannot interfere with the data transfer.

The local embedded processor 10 is programmed to open a virtual multimedia communication channel, in association with the hardware processor 8, only if an accumulated bandwidth, corresponding to the sum of all existing virtual multimedia communication channel bandwidths and including the virtual multimedia communication channel bandwidth to be assigned to the current virtual multimedia communication channel connection request for communication if established, is inferior to the 80% of the upper bandwidth limit reserved for multimedia data communication by the interface device 2. The local embedded processor 10 is adapted to calculate the accumulated bandwidth at any given moment.

During multimedia data communication from the network 4 to the multimedia device 3, direct memory addressing (DMA) is employed to transfer the multimedia data communicated from the hardware processor 8 to a DMA channel set up in the dedicated memory buffer segment of the memory buffer 16. An external receiving DMA controller 18 implemented in programmable hardware in association with the local embedded processor 10 controls the transfer of the multimedia data to the multimedia device 3 along the virtual multimedia communication channel of the multimedia data channel 15.

The interface device 2 when operating as a receiver of multimedia data from the network 4 functions as an interface that creates a stream of multimedia data flowing through the virtual multimedia communication channel to the multimedia device 3.

During multimedia data communication from the multimedia device 3 to the network 4, direct memory addressing (DMA) is also employed to transfer the multimedia data communicated from the multimedia device 3 to a DMA channel set up in the dedicated memory buffer segment of the memory buffer 20. An external transmission DMA controller 22 implemented in programmable hardware in association with the local embedded processor 10 controls the transfer of the multimedia data along the virtual multimedia communication channel to the multimedia data interface 14 and the hardware processor 8.

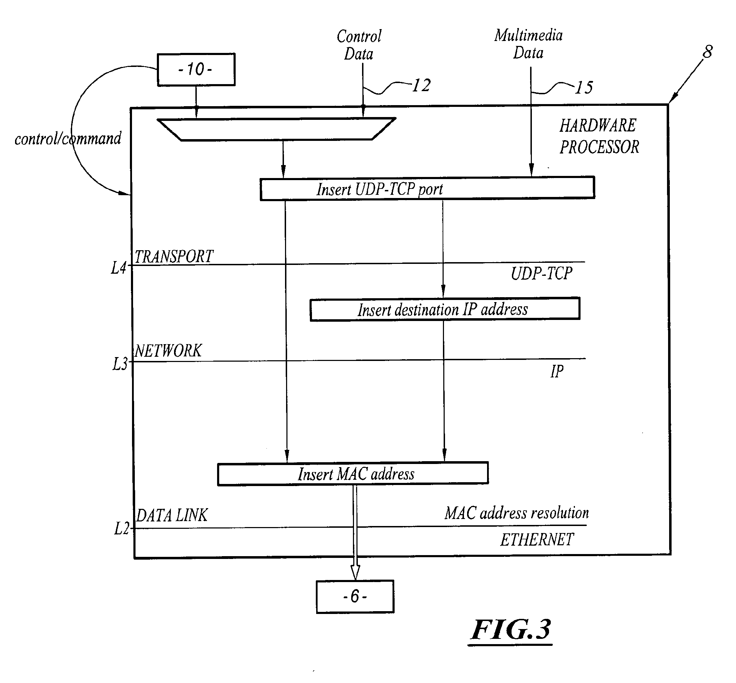

The hardware processor 8 is programmed to process and transfer the multimedia data from the multimedia data interface 14 and control data from the control data interface 12 to the network 4. The local embedded processor 10, through the exchange of control data with the external central processing unit 13 and using the segment identification numbers of the memory buffer segments, is adapted to distinguish each virtual multimedia communication channel and is aware of the destination of the data on each virtual multimedia communication channel. The local embedded processor 10 prepares and programs the insertion of data navigational portions by the hardware processor 8 at the transport, network and data link layer as illustrated in Figure 3. Data navigational portions for the application layer are generated and inserted by the local embedded processor 10.

To the data payload comprising multimedia data coming from the multimedia data interface 14 or control data coming from the control data interface 11, a navigational portion for the user datagram protocol or transfer control protocol navigational portion is added, a navigational portion is added for the internet protocol and for the Ethernet protocol. The resulting data ensemble is transferred by the hardware processor 8 to the network interface 6 to be sent on the network 4.

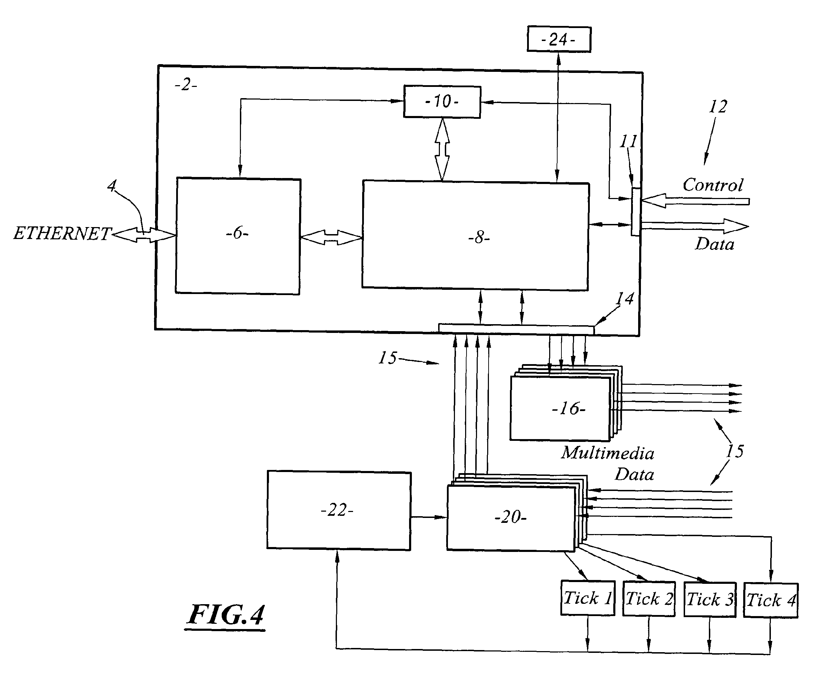

The control data and the multimedia data arrive at the interface device 2 for transmission to the network 4 through the control data channel 12 and the multimedia data channel 15, as illustrated in Figure 4. The assigned upper bandwidth limit for communication between the interface device 3 and the network 4 determined by the network manager is shared by the control data being received and being transmitted and by the virtual multimedia communication channels transmitting multimedia data and receiving multimedia data.

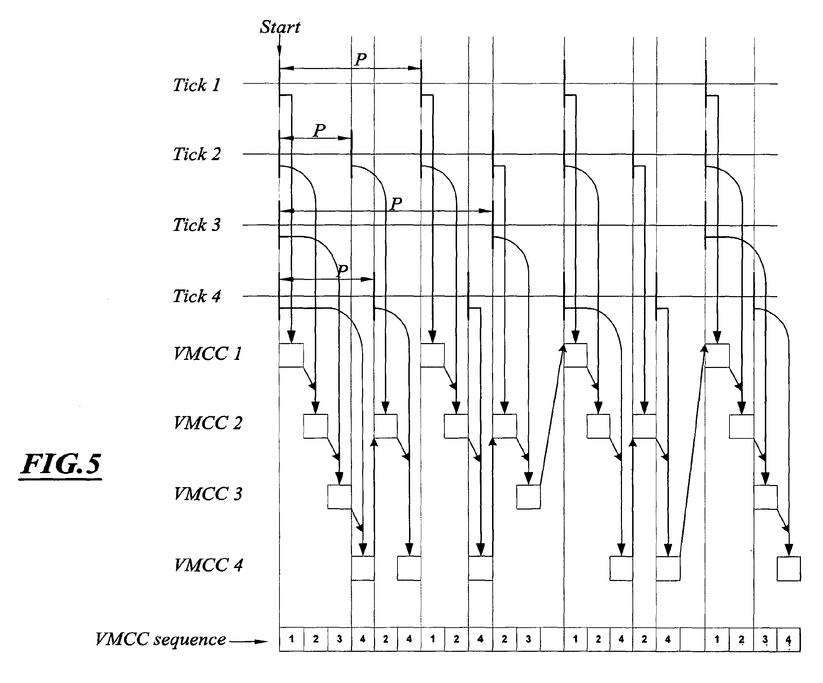

As previously mentioned, in the current embodiment the control data is assigned 20% of the assigned upper bandwidth limit with 80% reserved for multimedia data. A multimedia data bit-rate regulation mechanism, illustrated in Figure 5, is used to regulate the transmission of multimedia data to the network to ensure that the agreed virtual multimedia communication channel bandwidth is respected and that the reserved 80% of the assigned upper bandwidth limit is not surpassed by the established virtual multimedia communication channels. The multimedia data bit-rate regulation mechanism is managed by the local embedded processor 10 in association with the external transmission DMA controller 22.

The multimedia data bit-rate regulation mechanism (Figure 5) consists in delivering a regular tick to trigger the external transmission DMA controller 22 to transfer the data to the multimedia data interface 14 and the hardware processor 8. The data packets from each virtual multimedia communication channel are temporarily stored in the memory buffer 20 of FIFO type and the transfer from the memory buffer 20 to the hardware processor 8 is controlled by the bit-rate regulation mechanism. A transfer occurs to the hardware processor 8 upon each occurrence of a tick for the concerned virtual multimedia communication channel.

A tick period P is set up for each of the four transmission virtual multimedia communication channels (VMCC) illustrated in Figure 4. The tick period P is determined by dividing the size of the data packet agreed for the virtual multimedia communication channel by the virtual multimedia communication channel bit-rate and one data packet is sent per tick period P.

Transmission of a data payload is carried out when a tick of the virtual multimedia communication channel has occurred and as soon as the transmission of the previous payload is ended. If several ticks belonging to different virtual multimedia communication channels occur simultaneously, as is the case at the start of the transmission as illustrated in Figure 5, a round robin rule is applied.

The resulting virtual multimedia communication channel transmission (VMCC) sequence is illustrated in Figure 5. The result is a multiplexed stream where the instantaneous bit-rate is never higher than the upper bandwidth limit of the virtual multimedia communication channels.

A control data bit-rate regulation mechanism is also used to regulate the transmission of control data to the hardware processor 8 to ensure the assigned 20% of the upper bandwidth limit is not surpassed. The control data bit-rate regulation mechanism is managed by the multimedia device 3 in association with a timer 24.

The control data bit-rate regulation mechanism avoids undesirable transfers having high unlimited bit-rates and short duration that would saturate all the bandwidth. At each transfer of control data to the hardware processor 8 the timer 24 is triggered to start a transfer time and the next transfer cannot occur until the transfer time is terminated allowing the data transfer rate to be controlled. The transfer time depends on the transfer size, the larger the transfer size the longer the transfer time. The transfer bit rate is the transfer size divided by the transfer time. The timer 24 guarantees that the bandwidth allocated to the control data is not surpassed.

The control data and multimedia data bit-rate regulation mechanisms ensure that the agreed virtual multimedia communication channel bandwidth is not surpassed during the transmission of data by the interface device 2. The transmitting device on the network 4 employs similar mechanisms to respect the assigned virtual multimedia communication channel bandwidths. This provides a guaranteed bandwidth for each virtual multimedia communication channel and allows a deterministic quality of service and control of the data communication in the temporal domain to be guaranteed for each communication on the network 4.

The bandwidth of a virtual multimedia communication channel is thus guaranteed during the virtual multimedia communication channel lifetime as the virtual multimedia communication channel is protected from external manipulation from the network 4, the network manager, the multimedia device 3 and the local embedded processor 10. An additional virtual multimedia communication channels cannot be established if its creation causes the reserved upper bandwidth limit for multimedia data communication by the interface device 2 to be exceeded. Consequently, data communication respecting the strict temporal requirements of multimedia data communication on the network is possible.

The current embodiment of the invention has been described for the communication of multimedia data. However, the interface device 2 according to the invention can equally be used for the communication of all types of data such as information technology (IT) data.

## Claims

1. Interface device (2) for interfacing a multimedia device (3) with a network (4) and for communicating data comprising a data payload and at least one navigational portion for navigating the data through the network (4); the interface device (2) comprising
a hardware processor (8) for implementing dedicated hardware processing of the data and for communicating data between the multimedia device (3) and the network (4);
a network interface (6) to establish communication between the network (4) and the hardware processor (8);
a local embedded processor (10) for data processing in association with the hardware processor (8);
the interface device (2) being **characterised in that** the hardware processor (8) is adapted to process data comprising a data payload and a navigational portion; and the interface device (2) comprises a control data interface (11) and a multimedia data interface (14); the control data interface (11) permitting communication of a data payload containing only control data with the multimedia device (3) through a control communication channel (12) and the multimedia data interface (14) permitting communication of a data payload containing only multimedia data with the multimedia device (3) through a multimedia communication channel (15); the multimedia data interface (14) and the control data interface (11) being completely separated from one another.

2. Interface device (2) according to claim 1, **characterised in that** the hardware processor (8) is adapted to process the navigational portions of the data transmitted to and from the interface device (2) and to transfer the associated data payloads comprising control data to the control data interface (12) and the associated data payloads comprising multimedia data to the multimedia data interface (14) in accordance with the contents of the navigational portions.

3. Interface device (2) according to claims 1 or 2, **characterised in that** the hardware processor (8) is adapted to establish a plurality of virtual multimedia communication channels in the multimedia data interface (14), each virtual multimedia communication channel corresponding to an independent data transfer of multimedia data to or from the multimedia device (3) and each virtual multimedia communication channel having a determined and guaranteed bandwidth for multimedia data communication.

4. Interface device (2) according to claim 3, **characterised in that** the hardware processor (8) is adapted to process the navigational portions of the data transmitted to the interface device (2) and to transfer the associated data payloads comprising multimedia data to the corresponding virtual multimedia communication channel of the multimedia data interface (14) in accordance with the contents of the navigational portions.

5. Interface device (2) according to claim 3 or 4, **characterised in that** the multimedia data interface (14) has an associated and dedicated memory buffer (16, 20) and the hardware processor (8) is adapted to be programmed to correlate a segment of the dedicated memory buffer (16, 20) with data contained in at least one navigational portion of the communication data to establish a virtual multimedia communication channel.

6. Interface device (2) according to any one of claims 3 to 5, **characterised in that** the hardware processor (8) is adapted to establish a virtual multimedia communication channel, in association with the local embedded processor (10), for a time duration corresponding to a virtual multimedia communication channel lifetime and the hardware processor (8) is adapted to remain outside the control of the interface device (2) during the virtual multimedia communication channel lifetime.

7. Interface device (2) according to any one of claims 3 to 6, **characterised in that** the local embedded processor (10), in association with the hardware processor (8), is adapted to calculate an accumulated bandwidth corresponding to the sum of all existing virtual multimedia communication channel bandwidths and including the virtual multimedia communication channel bandwidth to be assigned to the current virtual multimedia communication channel if established; and the local embedded processor (10) is adapted to establish a virtual multimedia,communication channel only if the accumulated bandwidth is inferior to an assigned upper bandwidth limit of the interface device (2).

8. Interface device (2) according to any one of the preceding claims, **characterised in that** the hardware processor (8) is adapted to process and transfer data arriving from the network (4); the data being processed and transferred through the detection of a medium access controller address contained in an Ethernet protocol navigational portion, the detection of an internet protocol address contained in a internet protocol navigational portion and through the detection of a destination port number for the payload data in a transport control protocol navigational portion, the destination port number corresponding to the control data interface (11) or the multimedia data interface (14).

9. Interface device (2) according to any one of the preceding claims, **characterised in that** the hardware processor (8) is adapted to process data to be transmitted on the network (4); the data being processed through the insertion of a navigational portion for a transport control protocol or user datagram protocol, a navigational portion corresponding to an internet protocol and a navigational data portion corresponding to an Ethernet protocol.

10. Interface device (2) according to any one of the preceding claims, **characterised in that** the local embedded processor (10) is adapted to process and communicate data containing data payloads of only control data; the local embedded processor (10) being adapted to process an entire protocol stack comprising protocol layers from the data link layer to the application layer.
